# EUROPEAN PATENT SPECIFICATION

(11) **EP 2 294 022 B1**
(45) Date of publication and mention of the grant of the patent: **19.04.2017**
(21) Application number: 09750924.4
(22) Date of filing: 11.05.2009
(51) Int. Cl.: C03C 25/12, C03B 37/027

(54) **APPARATUS AND METHODS OF CONTROL FOR COOLANT RECYCLING**
VORRICHTUNG UND VERFAHREN ZUR STEUERUNG DER KÜHLMITTELREZYKLIERUNG
APPAREIL ET PROCÉDÉS DE CONTRÔLE DU RECYCLAGE DU REFROIDISSEUR

(30) Priority: 22.05.2008 US 154359
(43) Date of publication of application: 16.03.2011
(73) Proprietor: Corning Incorporated, Corning, NY 14831 (US)
(72) Inventor: CHLUDZINSKI, Paul, A., Hampstead NC 28443 (US); GAUSMAN, Gregory, G., Wilmington NC 28411 (US); SCHIRMER, William, Painted Post NY 14870 (US)
(74) Representative: Greene, Simon Kenneth
(86) International application number: PCT/US2009/002901
(87) International publication number: WO 2009/142693

(56) References cited:
- EP-A- 1 394 126
- US-A- 5 366 527
- US-A- 5 897 682
- US-A- 6 125 638

## Description

### BACKGROUND OF THE INVENTION

### Field of the Invention

The present invention relates generally to coolant gas recovery systems, and particularly to helium recovery systems associated with optical fiber cooling.

### Technical Background

In the production of optical fibers, a glass rod or preform is processed in an optical fiber drawing system. Typically, an optical fiber drawing and coating system includes a draw furnace, a heat exchanger, coating applicators, curing devices, and a spool. Initially, a glass rod or preform is melted in the draw furnace to produce a fiber that is cooled as it is passed through the heat exchanger. The cooled fiber from the heat exchanger is coated in a coating applicator with a primary coating, which coating is cured in a primary curing device. The coated fiber is then typically coated in a coating applicator with a secondary coating, which coating is cured in a secondary curing device. The fiber is then drawn onto a spool.

To increase the rate of cooling in the heat exchanger, it is often desirable to use a coolant gas having high thermal conductivity. One such gas is helium. Helium is a relatively expensive gas. In addition, as a noble gas, it is nonreactive. For these reasons, attempts have been made to recycle helium used in optical fiber cooling systems as disclosed, for example, in U.S. patent nos. 5,377,491 and 5,452,583.

When cooling an optical fiber in the heat exchanger, it is typically desirable to cool the fiber to within a specified temperature range. A major rationale for cooling the fiber to within a specified temperature range is that if the fiber leaving the heat exchanger is too hot or too cold, coating of the optical fiber is difficult, if not impossible (due to effects of the temperature of the fiber on the viscosity of the coating). And even in situations where fiber has been cooled to a temperature where coating can properly occur, power usage of the coating applicator and/or coolant use in the heat exchanger can be excessive. Thus, there is a continual need for improved systems and methods for cooling and coating optical fibers.

US5,897,682 teaches a method of cooling an optical fiber to be resin coated using helium gas. US 5,366,527 teaches a method of coating a fiber including controlling the viscosity parameter of the coating material.

### SUMMARY OF THE INVENTION

One aspect of the invention includes a method of cooling and coating an optical fiber according to claim 1.

In another aspect, the present invention includes an optical fiber cooling and coating system according to claim 5. The optical fiber cooling and coating system includes at least one heat exchanger. The heat exchanger includes a passageway for passing the optical fiber through the heat exchanger, at least one inlet for passing coolant gas into the passageway, and at least one outlet for removing coolant gas from the passageway. The optical fiber cooling and coating system also includes at least one pump for pumping coolant gas into the at least one inlet and out of the at least one outlet. In addition, the optical fiber cooling and coating system includes at least one coating applicator for coating at least a primary coating on the optical fiber after the optical fiber has been passed through the heat exchanger. The optical fiber cooling and coating system further includes at least one measuring component for measuring at least one parameter selected from the group consisting of the thermal conductivity of the coolant gas, the viscosity of the coolant gas, the diameter of the primary coating, and the power usage of the at least one coating applicator. Additionally, the optical fiber cooling and coating system includes at least one metering component for regulating the amount of coolant gas passing through the at least one inlet as a function of at least one parameter.

In a preferred embodiment, the at least one coating applicator includes a temperature controlled sizing die (TCSD).

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

It is to be understood that both the foregoing general description and the following detailed description present embodiments of the invention, and are intended to provide an overview or framework for understanding the nature and character of the invention as it is claimed. The accompanying drawings are included to provide a further understanding of the invention, and are incorporated into and constitute a part of this specification. The drawings illustrate various embodiments of the invention, and together with the description serve to explain the principles and operations of the invention.

### BRIEF DESCRIPTION OF THE DRAWINGS

FIG. 1 shows a schematic diagram of an optical fiber cooling and coating system according to one embodiment of the present invention;
FIG. 2 shows a schematic diagram of an optical fiber cooling and coating system according to another embodiment of the present invention;
FIG. 3 shows a cross-sectional view of a coating applicator including a temperature controlled sizing die (TCSD) that can be used in certain embodiments of the present invention;
FIG. 4 shows a chart of thermal conductivity as a function of helium concentration in binary helium-air mixtures;
FIG. 5 shows a chart of primary coating diameter as a function of helium coolant flowrate; and
FIG. 6 shows a chart of primary coating diameter as a function of sizing die heater power.

### DETAILED DESCRIPTION OF THE PREFERRED EMBODIMENTS

Reference will now be made in detail to the present preferred embodiments of the invention, examples of which are illustrated in the accompanying drawings. Whenever possible, the same reference numerals will be used throughout the drawings to refer to the same or like parts.

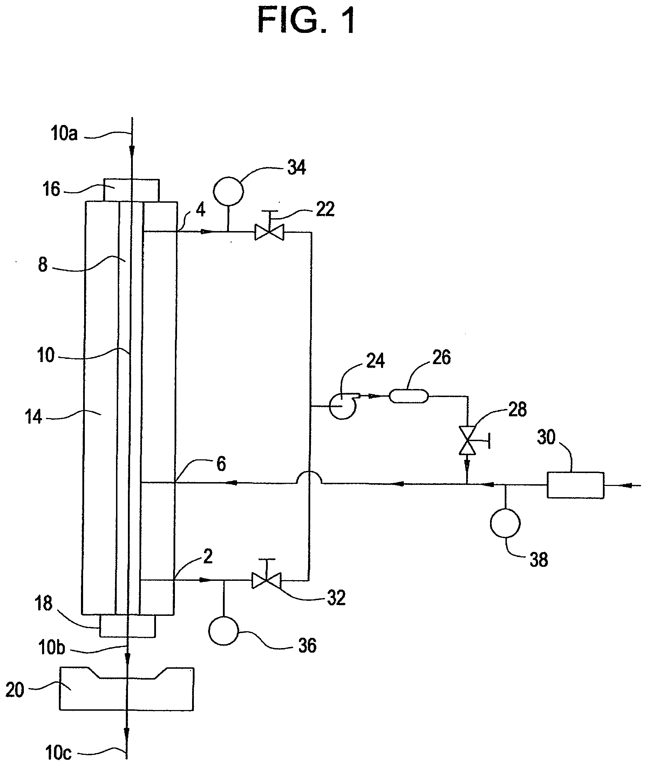

FIG. 1 shows a schematic diagram of an optical fiber cooling and coating system according to one embodiment of the present invention. The cooling and coating system includes a heat exchanger **14** that includes a passageway **8** for passing an optical fiber **10** through the heat exchanger. The heat exchanger further includes an inlet **6** for passing coolant gas into passageway **8** and outlets **2** and **4** for removing coolant gas from passageway **8.** The heat exchanger **14** is preferably refrigerated (i.e., at a temperature lower than the temperature of its surroundings) and preferably contains two small orifices or seals **16** and **18** located at the top and bottom of the heat exchanger **14.** The orifices or seals **16** and **18** are designed to minimize the infiltration of gases into and out of passageway **8.**

Fresh coolant gas from a coolant gas source (not shown) is provided to a mass flow controller (MFC) **30,** which regulates the amount of fresh coolant gas that is provided into passageway **8** through inlet **6.** Gas is simultaneously removed from passageway **8** through outlets **2** and **4.** Gas removed through outlets **2** and **4** preferably flows into a volume or ballast tank **26** for dampening gas flow surges. Metering valve **22** regulates the amount of gas removed through outlet **4,** metering valve **32** regulates the amount of gas removed through outlet **2,** and metering valve **28** regulates the amount of gas removed from ballast tank **26.** Gas removed from ballast tank **26** can be combined with fresh coolant gas from MFC **30** and recycled back into passageway **8** through inlet **6.** Metering valves **22, 28,** and **32** can each be opened and closed in varying amounts to regulate the flowrate of gas removed from and passed into passageway **8.** Metering valves **22, 28,** and **32** can also be operated in concert with MFC **30** to regulate the ratio of recycled gas to fresh coolant gas passed into passageway **8** through inlet **6.** A compressor or pump **24** provides the motive energy for the recycling process.

The system shown in FIG. 1 further includes measuring components **34, 36,** and **38.** According to the invention, the one or more of measuring components **34, 36,** and **38** measures coolant gas thermal conductivity.

In one embodiment, one or more of measuring components **34, 36,** and **38** measure coolant gas viscosity additionally.

According to the invention, the coolant gas includes helium. In a particularly preferred embodiment, the fresh coolant gas fed into MFC **30** is substantially pure helium, such as 99.995% pure helium, or alternatively 99.999% pure helium ("five nines").

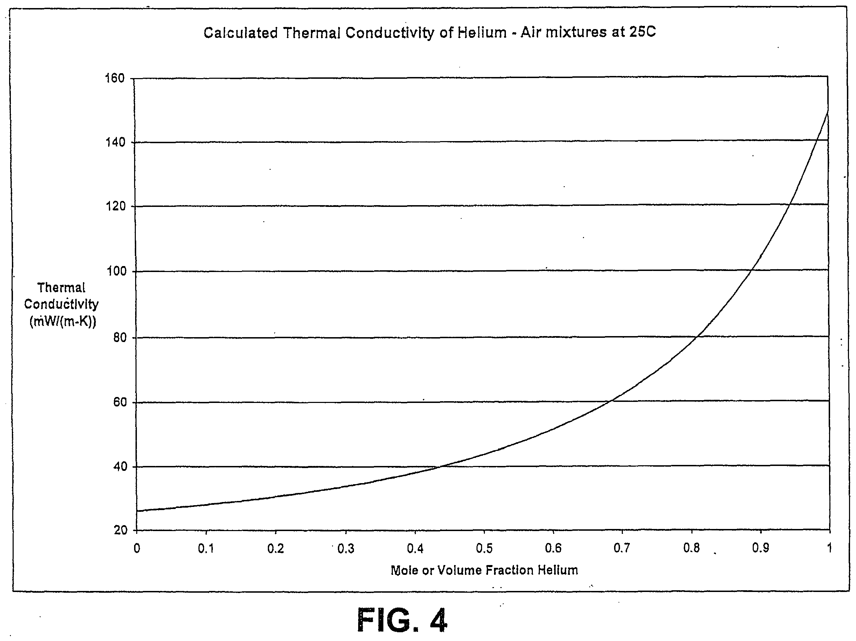

As the coolant gas is passed through inlet **6,** passageway **8,** and outlets **2** and **4,** some of it is lost to the outside of the system. For example, when the coolant gas fed into MFC **30** is substantially pure helium, some percentage of this helium is lost from the system when a coolant gas stream is passed through inlet **6,** passageway **8,** and outlets **2** and **4.** As a result, coolant gas passed from outlets **2** and **4** can be expected to have a lower concentration of helium (and a higher concentration of air) than coolant gas fed into MFC **30** or coolant gas passed through inlet **6.** Helium has a higher thermal conductivity than air at a given temperature (about 0.152 W/m·K at 25° C versus about 0.024 W/m·K at 25° C) such that the thermal conductivity of a binary helium-air mixture correlates to the helium content (and hence cooling capacity) of the mixture as shown, for example, in FIG. 4. Helium likewise has a higher viscosity than air at temperatures close to room temperature such that the viscosity of a binary helium-air mixture correlates to the helium content (and hence cooling capacity) of the mixture. Thus, by measuring coolant gas thermal conductivity and/or viscosity with measuring components **34, 36,** and **38,** a close approximation of the cooling capacity of a coolant gas stream can be determined.

When the system shown in FIG. 1 is being operated at full draw process speed, MFC **30** and metering valves **22, 28,** and **32,** can allow a set amount of coolant gas to pass through outlets **2** and **4,** from ballast tank **26,** and from MFC **30,** thereby resulting in a set amount of coolant gas being passed through inlet **6.** These amounts can be set to keep a measured coolant gas parameter, such as thermal conductivity and/or viscosity, within a predetermined range while taking into account the amount of coolant gas that is lost to the outside of the system. If one or more of measuring components **34, 36,** and **38** measure coolant gas thermal conductivity and/or viscosity below a predetermined setpoint, one or more of metering valves **22, 28,** and **32** can be closed by some amount, for example, as determined by a proportional-integral (PI) control loop. MFC **30** can also introduce more fresh coolant gas into the system. Conversely, if one or more measuring components **34, 36,** and **38** measure coolant gas thermal conductivity and/or viscosity above a predetermined setpoint, one or more metering valves **22, 28,** and **32** can be opened by some amount. MFC **30** can also introduce less fresh coolant gas into the system. Thus, in the system shown in FIG. 1, MFC **30,** and metering valves **22, 28,** and **32** each act as metering components to regulate the amount of coolant gas passing through inlet **6** and outlets **2** and **4.**

For example, when the measured coolant gas parameter is thermal conductivity and the fresh coolant gas comprises helium, one or more metering valves **22, 28,** and **32** and/or MFC **30** can be adjusted as described above if one or more measuring components **34, 36,** and **38** measure thermal conductivity as being outside of a predetermined range. In a preferred embodiment, the thermal conductivity of the coolant gas being pumped out of outlets **2** and **4,** as measured by measuring components **34** and **36,** ranges from 135 to 151 mW/(m·K) and even more preferably from 140 to 151 mW/(m·K), and yet even more preferably from 145 to 151 mW/(m·K).

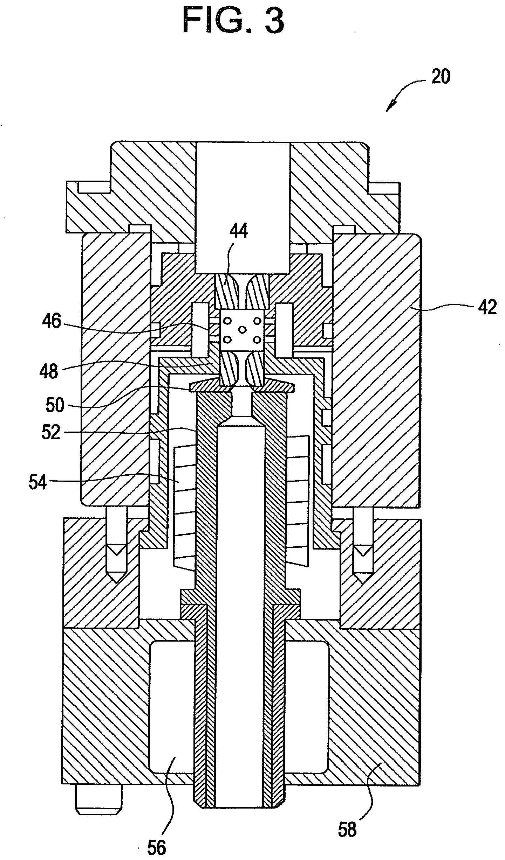

The system shown in FIG. 1 further includes a primary coating applicator **20.** Primary coating applicator **20,** an embodiment of which is described in more detail below with reference to FIG. 3, is capable of coating at least a primary coating on optical fiber after the fiber has been passed through heat exchanger **14.**

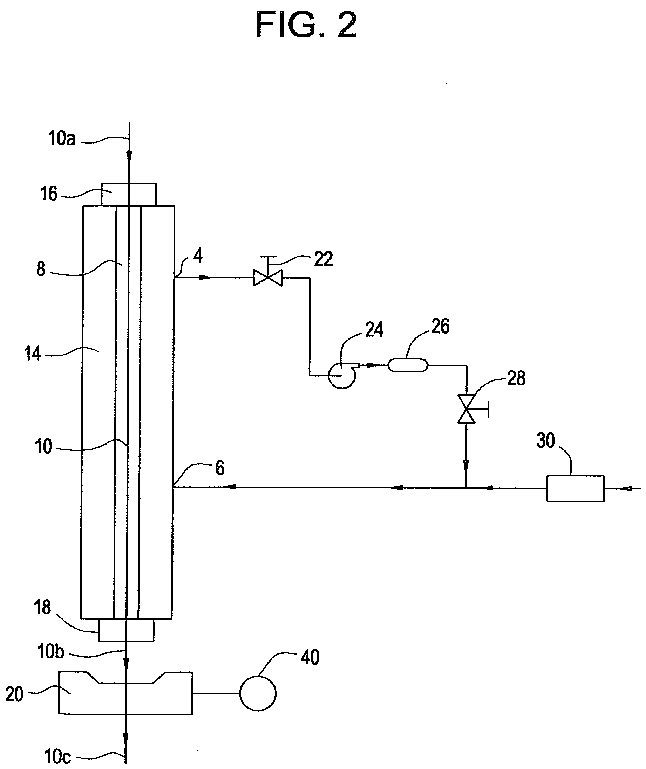

FIG. 2 shows a schematic diagram of an optical fiber cooling and coating system according to another embodiment of the present invention. As with the embodiment shown in FIG. 1, the cooling and coating system shown in FIG. 2 includes a heat exchanger **14,** passageway **8,** inlet **6,** outlet **4,** orifices or seals **16** and **18,** ballast tank **26,** MFC **30,** pump **24,** and metering valves **22** and **28.** As with the embodiment shown in FIG. 1, the heat exchanger **14** is preferably refrigerated.

As the coolant gas is passed through inlet **6,** passageway **8,** and outlet **4,** some of it is lost to the outside of the system. To compensate, coolant gas removed from ballast tank **26** can be combined with fresh coolant gas from MFC **30** and recycled back into passageway **8** through inlet **6.** Metering valves **22** and **28** can each be opened and closed in varying amounts to regulate the flowrate of gas removed from and passed into passageway **8.** Metering valves **22** and **28** can also be operated in concert with MFC **30** to regulate the ratio of recycled gas to fresh coolant gas passed into passageway **8** through inlet **6.**

According to the invention, the coolant gas includes helium. In a particularly preferred embodiment, the fresh coolant gas fed into MFC **30** is substantially pure helium, such as 99.995% pure helium, or alternatively 99.999% pure helium ("five nines").

The system shown in FIG. 2 further includes a primary coating applicator **20,** an embodiment of which is described in more detail below with reference to FIG. 3. In addition, the system shown in FIG. 2 includes measuring component **40.** In one preferred embodiment, measuring component **40** measures the diameter of the primary coating applied by the primary coating applicator **20.** In another preferred embodiment, measuring component **40** measures the power usage of coating applicator **20.** Measuring component **40** may be integral with coating applicator **20** and/or may be separate from coating applicator **20.**

When measuring component **40** measures the diameter of the primary coating applied by the primary coating applicator **20,** measuring component **40** can include commercially available devices that rely upon optical measurement of the coated fiber diameter, such as devices that employ a shadow technique that measures the width of the shadow cast by the fiber when the fiber is illuminated by a light source. Measuring component **40** can also include devices that measure fiber diameters at two locations and combine those measurements to produce an overall control signal. Such measuring components can include those in which uncoated fiber is illuminated with a beam of radiation so as to produce an interference pattern and the interference pattern is analyzed to produce a signal indicative of the diameter of the fiber.

When measuring component **40** measures the power usage of coating applicator 20, the measured power can be a measurement of the power supplied directly to coating applicator **20,** such as power from a common AC power source, which, in preferred embodiments, supplies power to a resistive heater in coating applicator **20.** When power usage of coating applicator **20** is referenced herein in terms of percentages, the percent power is determined as a function of the duty cycle of the AC current supplied to the resistive heater (resulting in a power output of the heater) as compared to the power capacity of the heater. For example, if the resistive heater is an 100 Watt model, 0% power usage of the coating applicator means 0 Watts, 20% power usage of the coating applicator means 20 Watts, 50% power usage of the coating applicator means 50 Watts, 80% power usage of the coating applicator means 80 Watts, and 100% power usage of the coating applicator means 100 Watts.

In operation, the system shown in FIGS. 1 and 2 cools optical fiber **10,** which is passed as a hot fiber (shown as **10a**) from, for example, a draw furnace (not shown) into passageway **8** of heat exchanger **14.** The cooled optical fiber (shown as **10b**) passing out of heat exchanger **14** is then passed into primary coating applicator **20.** The coated optical fiber (shown as **10c**) passing out of primary coating applicator **20** may then be cured in a primary coating curing device (not shown) and then coated in a secondary coating applicator (not shown), followed by curing in a secondary coating curing device (not shown) when the primary and secondary coatings are uv curable coatings. Embodiments of the invention, however, are not limited to the application of uv curable coatings and can include the application of other types of coatings (e.g., thermoplastic coatings, etc.).

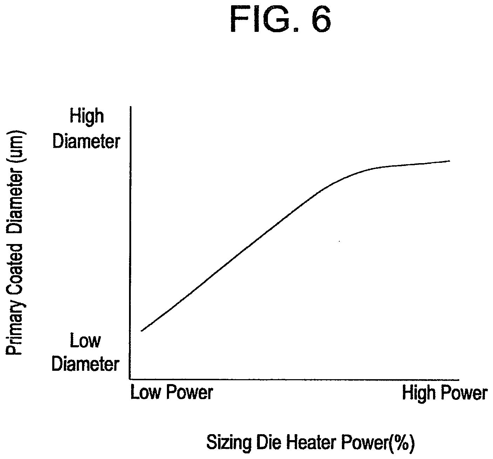

The diameter of the primary coating applied by the primary coating applicator **20** and/or the power usage of the primary coating applicator **20** can be correlated to the cooling capacity of the coolant gas flowing in passageway **8.** For example, if the cooling capacity of the coolant gas is lower than desired, fiber **10b** passing out of heat exchanger **14** will be hotter than desired. As a result, the diameter of the primary coating applied by the coating applicator **20** will be lower than desired (due to a lower coating viscosity on the hotter fiber) unless the power supplied to the coating applicator **20** can be increased to compensate (by increasing the rate at which coating is applied to the fiber - primary coating diameter as a function of coating applicator heater power at constant fiber temperature is shown in FIG. 6). Thus, when the cooling capacity of the coolant gas is lower than desired, the diameter of the primary coating applied by the coating applicator **20** will be lower and/or the power usage of the primary coating applicator **20** will be higher. Conversely, when the cooling capacity of the coolant gas is higher than desired, the diameter of the primary coating applied by the coating applicator **20** will be higher and/or the power usage of the primary coating applicator **20** will be lower.

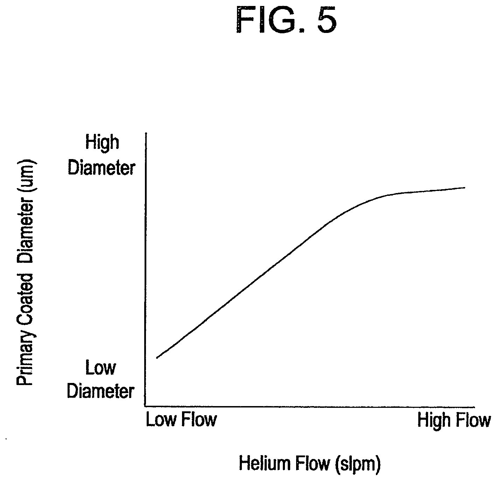

Since the cooling capacity of air/helium mixtures correlates to the helium content in the mixture as discussed above, the diameter of the primary coating applied by the primary coating applicator **20** and/or the power usage of the primary coating applicator **20** can be correlated to the helium content of the coolant gas flowing in passageway **8** (for example, the diameter of primary coating as a function of helium flow at constant primary coating applicator power usage is shown in FIG. 5). Thus, when the helium content of the coolant gas is lower than desired, the diameter of the primary coating applied by the coating applicator **20** will be lower and/or the power usage of the primary coating applicator **20** will be higher. Conversely, when the helium content of the coolant gas is higher than desired, the diameter of the primary coating applied by the coating applicator **20** will be higher and/or the power usage of the primary coating applicator **20** will be lower.

When the system shown in FIG. 2 is being operated at full draw process speed, MFC **30** and metering valves **22** and **28** can allow a set amount of coolant gas to pass through outlet **4,** from ballast tank **26,** and from MFC **30,** thereby resulting in a set amount of coolant gas being passed through inlet **6.** These amounts can be set to keep a measured parameter, such as the diameter of the primary coating applied by coating applicator **20** and/or power usage of coating applicator **20,** within a predetermined range while taking into account the amount of coolant gas that is lost to the outside of the system. If measuring component **40** measures the diameter of the primary coating applied by the primary coating applicator **20** below a certain setpoint and/or the power usage of the primary coating applicator **20** above a certain setpoint, one or more of metering valves **22** and **28** can be closed by some amount, for example, as determined by a proportional-integral (PI) control loop. MFC **30** can also introduce more fresh coolant gas into the system. Conversely, if measuring component **40** measures the diameter of the primary coating applied by the primary coating applicator **20** above a certain setpoint and/or the power usage of the primary coating applicator **20** below a certain setpoint, one or more metering valves **22** and **28** can be opened by some amount. MFC **30** can also introduce less fresh coolant gas into the system. Thus, in the system shown in FIG. 1, MFC **30,** and metering valves **22** and **28** each act as metering components to regulate the amount of coolant gas passing through inlet **6** and outlet **4.**

For example, when the measured parameter is power usage of the primary coating applicator **20** and the fresh coolant gas comprises helium, one or more metering valves **22** and **28** and/or MFC **30** can be adjusted as described above if measuring component **40** measures power usage as being outside of a predetermined range. In a preferred embodiment, the power usage of coating applicator **20,** as measured by measuring component **40,** ranges from 10% to 90% and even more preferably 20% to 80%.

The system shown in FIGS. 1 and 2 is capable of cooling optical fiber **10b** passing out of heat exchanger **14** to within a specific value or range. In preferred embodiments, the temperature of the fiber **10b** exiting heat exchanger **14** is less than 100° C, such as from 0° C to 90° C, including from 20° C to 60° C.

The system shown in FIGS. 1 and 2, can allow for at least 80%, and preferably at least 90%, of the coolant gas pumped into inlet **6** to be pumped out of outlet **4** (or outlets **2** and **4**) when the optical fiber **10** is passing through passage **8** of heat exchanger **14** at a rate of at least 15 meters per second, such as a rate of at least 30 meters per second. In preferred embodiments, coolant gas is pumped into inlet **6** at a rate of at least 100 standard liters per minute (slpm), such as at least 150 slpm, and further such as at least 200 slpm. In preferred embodiments, when the fresh coolant gas comprises helium, less than 20 slpm of helium is lost to the outside of the system between inlet **6** and outlet **4** (or outlets **2** and **4**), such as less than 15 slpm, and further such as less than 10 slpm when the optical fiber **10** is passing through passage **8** of heat exchanger **14** at a rate of at least 15 meters per second, such as a rate of at least 30 meters per second. Simultaneously, the power usage of coating applicator **20** can range from 10% to 90%, such as from 20% to 80%.

In preferred embodiments, coating applicator **20** can include a temperature controlled sizing die (TCSD), which, in the embodiments described herein, is a pressure fed coating device that relies upon local viscosity control of the coating material in the exit region of the coater to apply a pre-determined amount of coating onto the exiting fiber. A cross-sectional view of an exemplary coating applicator including a TCSD that may be used in embodiments of the present invention is shown in FIG. 3. Guide die **44** is placed within coater block **42.** Insert **46** is below guide die **44** and is the entrance for coating material into coating applicator **20.** Temperature controlled sizing die (TCSD) **48** is located below insert **46.** Disk **50** is located below TCSD **48** and thermally communicates with TCSD **48.** Disk **50** is made of a high thermal conductivity material to provide efficient transfer of heat to and from TCSD **48.** Heat transfer tube **52** is in thermal communication with disk **50.** Resistive heater **54** surrounds at least a portion of heat transfer tube **52.** A portion of heat transfer tube **52** extends below resistive heater **54** and is in thermal communication with heat sink **56.** Heat sink **56** is connected to a fluid circulation system **58** which may be optionally used to remove heat from heat sink **56.**

The amount of heat transferred to or from TCSD **48** can be adjusted based on a measurement of the diameter of the coated fiber to control the diameter of the coated fiber to a target value. If the measured diameter of the coated fiber is below the target value, heat is transferred to TCSD **48** from resistive heater **54** through disk **50.** This is accomplished by increasing the current to resistive heater **54** and will result in an increase in the temperature of the coating material near the wall of the TCSD **48** which, in turn, will decrease the viscosity of the coating material near the wall of the TCSD **48.** The decrease in viscosity of the coating material near the wall of the TCSD **48** will increase the amount of coating applied to the fiber, thereby increasing the diameter of the coated fiber. Similarly, if the measured value of the coated fiber is above the target value, heat can be transferred from TCSD **48** through disk **50,** heat transfer tube **52** and heat sink **56.** This can be accomplished by increasing the flow of fluid in the circulation system **58,** which will result in transferring heat from heat sink **56,** thereby reducing the temperature of the coating material near the wall of TCSD **48,** which, in turn, will increase the viscosity of the coating material near the wall of TCSD **48.** The increase in viscosity of the coating material near the wall of TCSD **48** will decrease the amount of coating material applied to the fiber, thereby reducing the diameter of the coated fiber. The amount of heat transferred through heat sink **56** can also be changed by increasing or decreasing the temperature of the fluid in the circulation system **58,** or by a combination of changing the flow and the temperature of the fluid.

Because of the possibility of adverse effects of physical properties of the coated fiber other than coated fiber diameter, due to the cooling features described in relation to FIG. 3, a preferred embodiment is an apparatus similar to that shown in FIG. 3 without heat sink **56** and fluid circulation system **58.** This also simplifies the design of the apparatus. In this case, the diameter of the exit of the TCSD **48** would be selected such that some heat would always be required to maintain the coated fiber diameter at the desired value. This requires that the diameter of the exit of the TCSD **48** be made smaller than would be required if both heating and cooling capabilities were included in the coating apparatus.

In a preferred embodiment, TCSD **48** is provided with resistive heater 54 that is a 120 VAC 100 Watt model. When optical fiber is being drawn through coating applicator at full process speed, power usage preferably ranges from 30% (30 Watts) to 60% (60 Watts) and can be controlled to stay within the range of from 20% (20 Watts) to 80% (80 Watts). In preferred embodiments, optical fiber can be drawn through heat exchanger **14** and coating applicator **20** at a rate of at least 15 m/s, such as at least 30 m/s.

By using a coating applicator with a TCSD, such as that illustrated in FIG. 3, the diameter of the primary coating on optical fiber **10c** can be kept within a tight specification range while the power usage of the coating applicator **20** is allowed to vary. The power usage of the coating applicator **20** can, in turn, be kept within a predetermined range by controlling the cooling rate of optical fiber **10** passing through passage 8 of heat exchanger **14,** using methods described above in which the power usage is measured directly (i.e., as in the embodiment illustrated in FIG. 2) or the thermal conductivity and/or viscosity of the coolant gas is measured (i.e., as in the embodiment illustrated in FIG. 1). In such way, costs associated with operating an optical fiber cooling and coating system can be reduced or minimized by balancing coolant gas costs against coating application costs.

One or more exemplary methods can also be used for ramping up optical fiber cooling and coating systems according to embodiments of the present invention. For example, in the embodiment illustrated in FIG. 2, in a first ramp-up stage, draw process speed is gradually increased from an initial speed to full draw process speed. During this stage, metering valve **28** is closed such that all coolant gas passing through inlet **6** is provided from MFC **30** (i.e., no coolant gas is being recycled). Coating applicator **20** is equipped with a TCSD, which allows the diameter of the primary coating on optical fiber **10c** to be kept within a tight specification range. Power usage of coating applicator **20** is, in turn, maintained at or near a pre-determined value (e.g., 40% of total output power) by allowing coolant gas provided from MFC **30** to generally increase as draw speed increases (i.e., as measuring component **40** measures power usage incrementally rising above the pre-determined value, a proportional-integral (PI) control loop instructs MFC **30** to introduce more coolant gas, thereby causing coating applicator **20** power usage to incrementally drop back to the pre-determined value). Once full draw process speed has been reached, a "no-recycle" MFC setpoint is recorded. This "no-recycle" MFC setpoint provides from MFC **30,** the requisite amount of coolant gas through inlet **6** in order to allow the power usage of the coating applicator to be maintained at or near the pre-determined value when no coolant gas is being recycled.

In an intermediate step between the first ramp up stage and a second ramp up stage, a "full-recycle" MFC setpoint is calculated. In full-recycle, unlike during the first ramp-up stage, only a portion of coolant gas provided through inlet **6** will be provided through MFC **30.** The remainder will be from recycle (i.e., through metering valve **28**). The "full-recycle" MFC setpoint is calculated to provide the same amount of coolant gas through inlet **6** during full recycle as was provided when full draw process speed was reached during first ramp-up stage at no recycle. For example, if the "no-recycle" MFC setpoint determined from the first ramp-up stage provided for 200 slpm of coolant gas through inlet **6** (in order for coating applicator **20** to be run at, for example, 40% of output power at full draw process speed), and it is estimated that 20 slpm (or 10%) of this coolant gas can be expected to be lost per recycle pass, then 180 slpm of this coolant gas would be expected to be recycled (i.e., through metering valve **28**) and the remaining **20** slpm would need to be provided through MFC **30** in order to continue to provide 200 slpm of coolant gas through inlet **6.** Thus, in this case, the "full-recycle" MFC setpoint would be calculated to provide 20 slpm of coolant gas from MFC **30.**

Once a "full-recycle" MFC setpoint is calculated, a second ramp-up stage is initiated. During this second ramp-up stage, the system is gradually transitioned from a "no-recycle" state to a "full-recycle" state by gradually replacing coolant gas provided from MFC **30** with recycled coolant gas (i.e., through metering valve **28**) while full draw process speed is maintained. In this stage, metering valve **28** is gradually opened while coolant gas from MFC **30** is gradually reduced until the "full-recycle" MFC setpoint is reached. As with the first ramp-up stage, during this second ramp-up stage, primary coating diameter on optical fiber **10c** is controlled with the TCSD.

Once the system is operating at "full-recycle" at steady state, coating applicator 20 power usage can be monitored either continually or incrementally by measuring component **40.** If the coating applicator **20** power usage is too high (e.g., more than 80%), insufficient fiber cooling is occurring. In such case, a control loop can increase the MFC setpoint to supply more coolant gas to drive the coating applicator power usage down to within an acceptable range (e.g., 20% to 80%). If the coating applicator **20** power usage is too low (e.g., less than 20%), excessive fiber cooling is occurring. In such case, a control loop can decrease the MFC setpoint to supply less coolant gas to drive the coating applicator power usage up to within the acceptable range.

In addition, coolant gas can be recycled more aggressively while the optical fiber cooling and coating system is being ramped up. For example, during a first ramp-up stage (when no recycle is occurring), draw speed can be increased to a level that is below full draw speed. Then during a second ramp-up stage, draw speed can be increased to full draw speed as the system is transitioning from a "no recycle" to a "full recycle" state. Alternatively, draw speed can be increased to full draw speed after the system has transitioned from a "no recycle" to a "full recycle" state. Such more aggressive helium recycling during ramp-up will typically require a "cooling map" as a function of draw speed so that a coolant requirement at full draw speed can be predicted by a coolant requirement at a lower speed.

## Claims

1. A method of cooling and coating an optical fiber comprising the steps of:
passing an optical fiber through at least one heat exchanger, the heat exchanger comprising a passageway for passing the optical fiber through the heat exchanger, at least one inlet for passing coolant gas into said passageway, and at least one outlet for removing coolant gas from said passageway;
pumping coolant gas comprising helium into said at least one inlet and out of said at least one outlet;
coating at least a primary coating on the optical fiber by passing the optical fiber through at least one coating applicator;
**characterised by** measuring the thermal conductivity of the coolant gas; and
regulating the amount of coolant gas passing through said at least one inlet as a function of the thermal conductivity of the coolant gas.

2. The method of claim 1, wherein the temperature of the fiber exiting the heat exchanger ranges from 0° C to 90° C.

3. The method of claim 1, wherein the thermal conductivity of the coolant gas being pumped out of said at least one outlet ranges from 135 to 151 mW/(m·K).

4. The method of claim 1, wherein at least 90% of the coolant gas pumped into said at least one inlet is pumped out of said at least one outlet when the optical fiber is passing through the heat exchanger at a rate of at least 30 meters per second.

5. An optical fiber cooling and coating system comprising:
at least one heat exchanger comprising a passageway for passing an optical fiber through the heat exchanger, at least one inlet for passing coolant gas into said passageway, and at least one outlet for removing coolant gas from said passageway;
at least one pump for pumping coolant gas comprising helium into said at least one inlet and out of said at least one outlet;
at least one coating applicator for coating at least a primary coating on the optical fiber after the optical fiber has been passed through the heat exchanger;
at least one measuring component for measuring the thermal conductivity of the coolant gas; and
at least one metering component for regulating the amount of coolant gas passing through said at least one inlet as a function of the thermal conductivity of the coolant gas.

## Patentansprüche

1. Verfahren zum Kühlen und Beschichten einer optischen Faser, umfassend die Schritte:
Hindurchführen einer optischen Faser durch mindestens einen Wärmeaustauscher, wobei der Wärmeaustauscher einen Durchgang zum Hindurchführen der optischen Faser durch den Wärmeaustauscher, mindestens einen Einlass zum Eintritt von Kühlgas in den Durchgang; und mindestens einen Auslass zum Entfernen von Kühlgas aus dem Durchgang aufweist,
Pumpen von Kühlgas aufweisend Helium in den mindestens einen Einlass und aus dem mindestens einen Auslass,
Aufbringen von mindestens einer Primärbeschichtung auf die optische Faser durch Hindurchführen der optischen Faser durch mindestens eine Beschichtungsauftrageeinrichtung,
**gekennzeichnet durch** Messung der Wärmeleitfähigkeit des Kühlgases und Regelung der den mindestens einen Einlass durchlaufende Kühlgasmenge als eine Funktion der Wärmeleitfähigkeit des Kühlgases.

2. Verfahren nach Anspruch 1, wobei die Temperatur der aus dem Wärmeaustauscher austretenden Faser von 0° C bis 90° C reicht.

3. Verfahren nach Anspruch 1, wobei die Wärmeleitfähigkeit des Kühlgases, das aus dem mindestens einen Auslass abgepumpt wird, von 135 bis 151 mW/(m·K) reicht.

4. Verfahren nach Anspruch 1, wobei mindestens 90% des in den mindestens einen Einlass gepumpten Kühlgases aus dem mindestens einem Auslass abgepumpt wird, wenn die optische Faser durch den Wärmeaustauscher mit einer Geschwindigkeit von mindestens 30 Meters pro Sekunde hindurchgeführt wird.

5. Kühl- und Beschichtungssystem für optische Faser, aufweisend:
mindestens einen Wärmeaustauscher aufweisend einen Durchgang zum Hindurchführen einer optischen Faser durch den Wärmeaustauscher, mindestens einen Einlass zum Eintritt von Kühlgas in den Durchgang und mindestens einen Auslass zum Entfernen von Kühlgas aus dem Durchgang,
mindestens eine Pumpe zum Pumpen von Helium aufweisenden Kühlgas in den mindestens einen Einlass und aus dem mindestens einen Auslass,
mindestens eine Beschichtungsauftrageeinrichtung zum Aufbringen von mindestens einer Primärbeschichtung auf die optische Faser, nachdem die optischen Faser durch den Wärmeaustauscher hindurchgeführt worden ist,
mindestens eine Messkomponente zum Messen der Wärmeleitfähigkeit des Kühlgases; und
mindestens eine Dosierkomponente zum Regeln der den mindestens einen Einlass durchlaufende Kühlgasmenge als eine Funktion der Wärmeleitfähigkeit des Kühlgases.

## Revendications

1. Procédé de refroidissement et de revêtement d'une fibre optique comprenant les étapes consistant à :
faire passer une fibre optique à travers au moins un échangeur de chaleur, l'échangeur de chaleur comprenant un passage permettant le passage de la fibre optique à travers l'échangeur de chaleur, au moins une entrée permettant le passage d'un gaz de refroidissement dans ledit passage, et au moins une sortie permettant l'évacuation d'un gaz de refroidissement dudit passage ;
pomper un gaz de refroidissement comprenant de l'hélium en entrée dans ladite au moins une entrée et en sortie de ladite au moins une sortie ;
appliquer au moins un revêtement primaire à la fibre optique par passage de la fibre optique à travers au moins un dispositif d'application de revêtement ;
**caractérisé par** la mesure de la conductivité thermique du gaz de refroidissement ; et par la régulation de la quantité de gaz de refroidissement passant par ladite au moins une entrée en fonction de la conductivité thermique du gaz de refroidissement.

2. Procédé selon la revendication 1, dans lequel la température de la fibre sortant de l'échangeur de chaleur est comprise entre 0 °C et 90 °C.

3. Procédé selon la revendication 1, dans lequel la conductivité thermique du gaz de refroidissement pompé en sortie de ladite au moins une sortie est comprise entre 135 et 151 mW/(m·K).

4. Procédé selon la revendication 1, dans lequel au moins 90 % du gaz de refroidissement pompé en entrée dans ladite au moins une entrée est pompé en sortie de ladite au moins une sortie lorsque la fibre optique passe à travers l'échangeur de chaleur à une vitesse d'au moins 30 mètres par seconde.

5. Système de refroidissement et de revêtement de fibre optique comprenant :
au moins un échangeur de chaleur comprenant un passage permettant le passage d'une fibre optique à travers l'échangeur de chaleur, au moins une entrée permettant le passage d'un gaz de refroidissement dans ledit passage, et au moins une sortie permettant l'évacuation d'un gaz de refroidissement dudit passage ;
au moins une pompe destinée à pomper un gaz de refroidissement comprenant de l'hélium en entrée dans ladite au moins une entrée et en sortie de ladite au moins une sortie ;
au moins un dispositif d'application de revêtement destiné à appliquer au moins un revêtement primaire à la fibre optique après le passage de la fibre optique à travers l'échangeur de chaleur ;
au moins un composant de mesure destiné à mesurer la conductivité thermique du gaz de refroidissement ; et
au moins un composant de dosage destiné à réguler la quantité de gaz de refroidissement passant par ladite au moins une entrée en fonction de la conductivité thermique du gaz de refroidissement.
